## Europäisches Patentamt

## European Patent Office

(11) Veröffentlichungsnummer: **0 131 802**

## Office européen des brevets

**B1**

(12) ## EUROPÄISCHE PATENTSCHRIFT

(45) Veröffentlichungstag der Patentschrift:
12.10.88

(51) Int. Cl.⁴: **C 08 G 59/64**, C 09 D 3/58

(21) Anmeldenummer: **84107383.6**

(22) Anmeldetag: **27.06.84**

(54) **Verfahren zur Herstellung von Oberflächenbeschichtungen auf Basis von Epoxidharz/Härter-Mischungen.**

(30) Priorität: **09.07.83 DE 3324873**

(43) Veröffentlichungstag der Anmeldung:
**23.01.85 Patentblatt 85/4**

(45) Bekanntmachung des Hinweises auf die Patenterteilung:
**12.10.88 Patentblatt 88/41**

(84) Benannte Vertragsstaaten:
**AT BE CH DE FR GB IT LI LU NL SE**

(73) Patentinhaber: **SCHERING AKTIENGESELLSCHAFT Berlin und Bergkamen, Waldstrasse 14 Postfach 15 40, D-4709 Bergkamen (DE)**

(72) Erfinder: **Cristian, Burba, Dr., Gerhart- Hauptmann-Strasse 9, D-4715 Ascheberg- Herbern (DE)**
Erfinder: **Herbert, Franz, Albert- Schweitzer-Strasse 41, D-4700 Hamm 3 (DE)**

(56) Entgegenhaltungen:
EP-A-0 088 623
GB-A-1 131 543
GB-A-2 100 718
US-A-4 070 400
US-A-4 330 660

PATENTS ABSTRACTS OF JAPAN, Band 4, Nr. 42 (C-5) 524 , 3. April 1980; & JP - A - 55 13 754 (SANYO KASEI KOGYO K.K.) 30.01.1980

Die Akte enthält technische Angaben, die nach dem Eingang der Anmeldung eingereicht wurden und die nicht in dieser Patentschrift enthalten sind.

EP 0 131 802 B1

# 0 131 802

**Beschreibung**

Die Erfindung betrifft ein Verfahren zur Herstellung von Oberflächenbeschichtungen, insbesondere von Lacken und Überzügen auf Basis härtbarer Kunstharzmischung aus Epoxidharzen und Polyaminen, wobei als Polyamine Umsetzungsprodukte aus Epichlorhydrin und cycloaliphatischen diprimären Diaminen verwendet werden.

Es ist bekannt, daß Oberflächenbeschichtungen auf Basis von Epoxidharzen und aminischen Härtungsmitteln gute chemische und physikalische Eigenschaften aufweisen.

Bei der Aushärtung an der Luft, insbesondere bei tiefen Temperaturen und/oder erhöhtem Feuchtigkeitsgehalt, zeigen diese Mischungen jedoch keine einwandfreie Aushärtung. Dies zeigt sich dadurch, daß die Oberflächen entweder klebrig, trüb oder matt bleiben können oder Strukturstörungen wie die sogenannte "Apfelsinenschalenhaut" aufweisen. Zur Verringerung der Feuchtigkeitsempfindlichkeit wurden deshalb anstelle niedrig molekularer Amine Addukte aus Epoxidharz und Aminen als Härter eingesetzt. Zur Herstellung dieser Addukte wird das Epoxidharz mit einem Überschuß eines niedrig molekularen Polyamins umgesetzt, so daß sich an jede Epoxidgruppe je ein Aminmolekül anlagert. Die dabei gebildeten Verbindungen enthalten pro umgesetzter Epoxidgruppe eine OH-Gruppe.

Diese Addukte weisen zwar geringere Feuchtigkeitsempfindlichkeit auf, haben aber den Nachteil einer beträchtlich erhöhten Viskosität, d. h. sie sind z. T. feste Produkte, wodurch ihr Einsatz insbesondere auf den Lösungsmittelfreien Anwendungsgebieten problematisch ist.

Insbesondere die Strukturstörungen der Oberfläche können unter den wechselnden realen Härtungsbedingungen der Praxis mit diesen Addukten nicht mit Sicherheit unterbunden werden.

Die Umsetzungsprodukte aus Epichlorhydrin und überschüssigen araliphatischen Aminen, wie es von der EP-A-0 088 623 ausgeht, weisen in dieser Richtung zwar einen Fortschritt auf, erfüllen jedoch noch nicht alle Forderungen der Praxis, insbesondere bei lösungsmittelfreien Systemen.

In der GB-A-2 100 718 A werden Epoxidharz/Härter-Mischungen beschrieben, welche insbesondere zur Verklebung von Metallen verwendet werden sollen. Die nachteiligen Eigenschaften der Aminhärter, deren Aminogruppe in oder direkt an cycloaliphatischen Ringen gebunden ist (Seite 1 Zeilen 10 - 17), sollen durch die dort verwendeten Härter, bei denen sich zwischen Ring und Aminogruppe eine Methylengruppe befindet, überwunden werden.

Aus der US-A-4 330 660 sind Addukte aus 1,2-Diaminocyclohexan mit Ethylenoxid und/oder Propylenoxid bekannt. Neben ihrer Verwendung als Öl/Kraftstoffzusätze oder Zusatz in Polyurethan-Mischungen, Herstellung von Polyamiden werden sie vorzugsweise als Härter für Epoxidharze bei der Herstellung von Formmassen eingesetzt.

Der Erfindung liegt die Aufgabe zugrunde, ein Verfahren zur Herstellung von Oberflächenbeschichtungen, insbesondere Lacke und Überzüge, zur Verfügung zu stellen, welches diese Nachteile des Standes der Technik behebt und Oberflächen mit einwandfreier Struktur und hohem Glanz ermöglicht und auch die lösungsmittelfreien härtbaren Mischungen eine praxisgerechte Viskosität aufweisen.

Diese Aufgabe wird erfindungsgemäß gelöst durch ein Verfahren zur Herstellung von Oberflächenbeschichtungen auf Basis härtbarer Kunstharzmischungen durch Usetzung von 1) festen oder flüssigen Polyglycidyläthern mit Epoxidwerten von 0,1 bis 0,6, gegebenenfalls unter Mitverwendung von niedrigviskosen reaktiven Verdünnern mit 2) Polyaminen mit im Durchschnitt mehr als zwei reaktiven Aminwasserstoffatomen, gegebenenfalls unter Mitverwendung üblicher Härtungsmittel, Lösungsmittel, Zusatzstoffe und Additive, das dadurch gekennzeichnet ist, daß als Komponente 2) Umsetzungsprodukte aus Epichlorhydrin und cycloaliphatischen diprimären Diaminen im Molverhältnis 1 : >1 bis 1 : 2 verwendet werden.

Weitere Gegenstände der Erfindung sind durch die Ansprüche 2 bis 6 gekennzeichnet.

Die erfindungsgemäß mitverwendeten Epoxidharze sind Glycidyläther mit mehr als einer Epoxidgruppe pro Molekül, die sich von mehrwertigen Phenolen, insbesondere Bisphenolen sowie Novolaken ableiten und deren Epoxidwerte zwischen 0,1 und 0,6, insbesondere jedoch zwischen 0,2 und 0,55, liegen.

Eine umfangreiche Aufzählung dieser Di- oder Polyphenole findet sich in dem Handbuch "Epoxidverbindungen und Epoxidharze" von A. M. Paquin, Springer Verlag, Berlin 1958, Kapitel IV und Lee, Neville "Handbook of Epoxy Resins", 1967, Chapter 2. Es können auch Mischungen von zwei oder mehreren Epoxidharzen verwendet werden. Erfindungsgemäß bevorzugt werden flüssige Diglycidyläther auf Basis von Bisphenol A mit einem Epoxidwert von 0,4 bis 0,55.

Falls erforderlich, können zur Modifizierung die bekannten reaktiven Verdünner wie Äthyl-hexylglycidyläther, Butylglycidyläther, langkettige aliphatische Glycidyläther, Monoglycidyläther eines höheren isomeren Alkoholgemisches, 1,6-Hexandioldiglycidyläther, Kresylglycidyläther, Neopentylglykoldiglycidyläther, p-tert. Butyl-phenylglycidyläther in Mengen bis zu 30 Gew.-%, vorzugsweise 10 - 15 Gew.-% - bezogen auf Polyglycidyläther - mitverwendet werden.

Als Beispiele für die erfindungsgemäß verwendeten cycloaliphatischen diprimären Diamine seien genannt 1,3-Diaminocyclohexan, 1,4-Diaminocyclohexan, 1,2-Diamino-4-ethylcyclohexan, 1,4-Diamino-3,6-diäthylcyclohexan, 1-Cyclohexyl-3,4-diaminocyclohexan und vorzugsweise 1,2-Diaminocyclohexan.

Diese Amine werden im Überschuß - bezogen auf reaktive Gruppen - mit Epichlorhydrin zu den entsprechenden Hydroxylaminen umgesetzt. Dabei liegt das Molverhältnis von Epichlorhydrin zu Diamin zwischen 1 : >1 bis 1 : 2, vorzugsweise zwischen 1 : 1,5 bis 1 : 2.

2

Die Reaktionsprodukte können allein oder in Mischung eingesetzt, oder es können bei ihrer Herstellung ein oder mehrere der genannten Diamine in den angegebenen Mengen mit Epichlorhydrin umgesetzt werden.

Werden die erfindungsgemäß verwendeten Reaktionsprodukte allein als Härtungsmittel eingesetzt, sind Strukturstörungen der Oberfläche des gehärteten Films mit großer Sicherheit auszuschließen und die Filme weisen außerdem einen hohen Glanz auf.

Aufgrund dieser hervorragenden Wirksamkeit der erfindungsgemäß verwendeten Reaktionsprodukte können auch die o. a. nicht mit Epichlorhydrin umgesetzten, d. h. freien Aminverbindungen und übliche aminische Härtungsmittel für Epoxidharze mitverwendet werden. Das Mengenverhältnis ist je nach Art der eingesetzten erfindungsgemäßen und handelsüblichen Härtungsmittel innerhalb relativ weiter Grenzen variierbar und ist durch wenige orientierende Handversuche leicht ermittelbar. Sichtbare Verbesserungen hinsichtlich Oberflächenstruktur und Glanz werden üblicherweise schon bei Anteilen von ca. 20 Gew.-% an erfindungsgemäß mitverwendeten Reaktionsprodukten - bezogen auf Gesamthärtermenge - erzielt.

Werden anstelle der Reaktionsprodukte allein ihre Mischungen mit handelsüblichen aminischen Härtungsmitteln für Epoxidharze eingesetzt, ist es darüberhinaus möglich das Molverhältnis von Epichlorhydrin zu Diamin über die Grenzen von 1 : >1 bis 1 : 2 hinaus zu unter- bzw. überschreiten. Man erhält so höhermolekulare Verbindungen oder Mischungen der Reaktionsprodukte mit freien Aminen. Höhemolekulare Verbindungen sind zwar erfindungsgemäß weniger bevorzugt, da sie eine deutlich höhere Viskosität aufweisen, weisen aber in Mischung mit niedrig viskosen Komponenten oder Lösungsmitteln ebenfalls noch struktur- und glanzverbessernde Eigenschaften auf.

Falls gewünscht, können die erfindungsgemäß verwendeten Reaktionsprodukte aus Epichlorhydrin und den genannten Diaminen auch in der auf dem Epoxidharz/Härter-Gebiet üblichen Weise modifiziert werden, d. h. sie können in bekannter Weise umgesetzt werden zu Phenol-Formaldehyd-Kondensationsprodukten oder mit geringeren als den stöchiometrischen Mengen an Epoxidharzen, ungesättigten Verbindungen wie z. B. Acrylnitril, Acrylsäure, Acrylsäureestern adduktiert werden.

Die in diesem Sinne bevorzugten Umsetzungsprodukte werden hergestellt durch Kondensation von natürlichen oder synthetischen monomeren Fettsäuren mit 12 - 22, insbesondere 18 Kohlenstoffatomen sowie deren Di- und Polymerisationsprodukte mit überschüssigem Reaktionsprodukt aus 1,2-Diaminocyclohexan und Epichlorhydrin. Diese Polyaminoamide weisen Aminzahlen von ca. 200 - 600, insbesondere 300 - 500 auf.

In dem erfindungsgemäßen Verfahren werden die Glycidyläther und die Härtungsmittel vorzugsweise in annähernd äquivalenten Mengen, d. h. bezogen auf Epoxidgruppen und reaktive Aminwasserstoffatome, eingesetzt. Es ist jedoch möglich, mit Über- bzw. Unterschüssen der Komponenten von ca. 5 - 10 % zu arbeiten, wenn eine Modifizierung der ausgehärteten Beschichtung in Richtung auf gewünschte Endeigenschaften erzielt werden soll.

Weiterhin sind Zusätze von üblichen Modifizierungsmitteln zur Erzielung einer optimalen Oberflächenbeschichtung möglich, als Füllstoffe z. B. Quarzmehl, Silicate, Kreide, Gips, Schwerspat, Titandioxid, Ruß, Metallpulver, organische und anorganische Fasern, als Weichmacher Phthalsäureester, Benzylalkohol, Phosphite, als Lösungsmittel Toluol, Xylol, Diacetonalkohol, Ketone, Äthylglykolmonoäther. Als sonstige Zusatzmittel sind zu nennen Farbstoffe, Verlaufsmittel, Thixotropierungsmittel und flammhemmende Stoffe.

Zur Beeinflussung der Gelier- und Härtungszeiten können zugesetzt werden Mono- oder Polyphenole, Salicylsäure, Benzoesäure, tert. Amine wie Dimethylaminobenzylamin, 1,3,5-Tris-(dimethylamino)phenol (DMP 30) und andere auf diesen Gebiet übliche Beschleuniger.

Das erfindungsgemäße Verfahren ist anwendbar zur Beschichtung von saugenden und nichtsaugenden organischen oder anorganischen Substraten wie z. B. Holz, Gummi, Leder, Textilien, Metalle, Beton.

## Herstellung der Amin/Epichlorhydrin-Umsetzungsprodukte

In einem heizbaren Reaktionsgefäß werden 456 g 1,2-Diaminocyclohexan (4 Mol) und 500 ml Äthanol auf 65°C erwärmt. Zu dieser Lösung werden unter gutem Rühren langsam 185 g (2 Mol) Epichlorhydrin zugetropft. Nach Beendigung der Zugabe wird die Reaktion noch 2 Std bei 65°C und 30 min unter Rückfluß weitergeführt. Nach Abkühlung auf Raumtemperatur werden 80 g (2 Mol) festes Natriumhydroxyd portionsweise zugegeben und 4 Std bei 40 - 50°C gerührt. Das gebildete NaCl wird abfiltriert und Äthanol abdestilliert, zuletzt bei 100°C und 70 mbar.

Das Umsetzungsprodukt hatte folgende analytischen Werte:

| | |
|---|---|
| Aminzahl (Az) | : 750 mg KOH/g |
| Viskosität bei 25°C | : 4,0 Pa.s |
| Gew.-% Cl | : 0,2 |

Nach der gleichen Methode wurden die weiteren Umsetungsprodukte hergestellt.

3

# 0 131 802

**Tabelle 1**

| Beispiel | Amin | Mol | Mol ECH[1] | Aminzahl mg KOH/g | Viskosität 25°C Pa.s |
|---|---|---|---|---|---|
| 1 | 1,2 DCH[2] | 2 | 1 | 750 | 4,0 |
| 2 | 1,2 DCH[2] | 1,5 | 1 | 705 | 7,0 |
| Vergl.-beisp. | | | | | |
| 3 | EDA[3] | 2 | 1 | 1010 | hochvisk. |

[1] = ECH Epichlorhydrin
[2] = 1,2 DCH 1,2-Diaminocyclohexan
[3] EDA = Äthylendiamin

Zur Herstellung der Oberflächenbeschichtungen wurden Epoxidharz und Härter entsprechend den in Tabelle 2 angegebenen Mengen zusammengegeben und homogenisiert. Diese härtbare Mischung wurde auf eine Glasplatte aufgetragen, mit einem Rakel auf eine gleichmäßige Schichtstärke von 0,2 mm gebracht und unter den angegebenen Bedingungen ausgehärtet.

**Tabelle 2**

| Bei-spiel | Umsetzungsprodukt Tab. 1 Beispiel Nr. | g[1] | Epoxidharz Typ | g | Oberflächenbeschaffenheit bei Härtungsbedingungen | |
|---|---|---|---|---|---|---|
| | | | | | 24h 10°C 90 % Luftfeuchtigk. | 3h 10°C/90 % Luftfeuchtigk. 24h 23°C/60 % " |
| 1 | 1 | 50 | EUREPOX®710[2] | 100 | Hochglanz | Hochglanz |
| 2 | 2 | 55 | " | 100 | Hochglanz | Hochglanz |
| 3 | 1 | 50 | [3] | 167 | Hochglanz | GLZ[4] 100, einwandfrei |
| 4 | 2 | 55 | [3] | 167 | Hochglanz | GLZ 97, einwandfrei |
| Vergleichs-beispiel | | | | | | |
| 5 | 3 | 30,8 | [3] | 167 | trübe, starke Struktur | leicht trübe, Struktur |

[1] 50 %-ig in Benzylalkohol
[2] EUREPOX®710, Warenzeichen der Fa. Schering AG
Epoxidharz auf Basis von Bisphenol A, Ep-Wert 0,52
[3] Pigmentpaste aus 3000 g Epoxidharz (Ep-Wert 0,52) bestehend aus 88 % Dianharz und 12 % p-tert.-Butylphenylglycidyläther
270 g Rotpigment PEG 356
1740 g eines natürlich gewachsenen Al,K,Mg-Silikats (Fa. Naintsch, Münch.
[4] Glanzgrad gemessen mit Reflektometer (Dr. Lange) 60°

**Patentansprüche**

1. Verfahren zur Herstellung von Oberflächenbeschichtungen auf Basis härtbarer Kunstharzmischungen durch Umsetzung von 1) festen oder flüssigen Polyglycidyläthern mit Epoxidwerten von 0,1 bis 0,6, gegebenenfalls unter Mitverwendung von niedrigviskosen reaktiven Verdünnern mit 2) Polyaminen mit im Durchschnitt mehr als zwei reaktiven Aminwasserstoffatomen, gegebenenfalls unter Mitverwendung üblicher Härtungsmittel, Lösungsmittel, Zusatzstoffe und Addtive, dadurch gekennzeichnet, daß als Komponente 2) Reaktionsprodukte aus Epichlorhydrin und cycloaliphatischen diprimären Diaminen im Molverhältnis 1 : >1 bis 1 : 2 verwendet werden.

2. Verfahren gemäß Anspruch 1, dadurch gekennzeichnet, daß als cycloaliphatisches Diamin 1,2-Diaminocyclohexan verwendet wird.

3. Verfahren gemäß Anspruch 1 und 2, dadurch gekennzeichnet, daß als Härterkomponente 2) Reaktionsprodukte aus Epichlorhydrin und Diaminkomponente im Molverhältnis 1 : 1,5 bis 1 : 2 umgesetzt

4

werden.

4. Verfahren gemäß den Ansprüchen 1 - 3, dadurch gekennzeichnet, daß als Härterkomponente 2) Kondensationsprodukte mit Aminzahlen von 300 - 500 aus natürlichen oder synthetischen monomeren Fettsäuren mit 12 - 22 Kohlenstoffatomen mit überschüssigem Reaktionsprodukt aus Epichlorhydrin und 1,2-Diaminocyclohexan verwendet werden.

5. Verfahren gemäß den Ansprüchen 1 bis 4, dadurch gekennzeichnet, daß als Epoxidharze flüssige Diglycidyläther auf Basis von Bisphenol A mit einem Epoxidwert von 0,4 bis 0,55 eingesetzt werden.

6. Mittel für das Verfahren gemäß Anspruch 1, bestehend aus härtbaren Kunstharzmischungen aus

A. Festen oder flüssigen Polyglycidylverbindungen mit Epoxidwerten von 0,1 bis 0,6 gegebenenfalls unter Mitverwendung von niedrigviskosen reaktiven Verdünnern mit

B. Polyaminen mit Durchschnitt mehr als zwei reaktiven Aminwasserstoffatomen, welche hergestellt werden durch Umsetzung von

a) Epichlorhydrin mit

b) diprimären Diaminen

im Molverhältnis von a) zu b) von 1 : >1 bis 1 : 2 und gegebenenfalls

C. üblichen Härtungsmitteln, Lösungsmitteln, Zusatzstoffen und Additiven, dadurch gekennzeichnet, daß die Diamine Bb) cycloaliphatische Diamine sind.

## Claims

1. Process for the manufacture of surface coatings based on curable synthetic resin mixtures by reaction of 1) solid or liquid polyglycidyl ethers having epoxy values of from 0.1 to 0.6, optionally with the co-use of reactive low viscosity diluents, with 2) polyamines having, on average, more than two reactive amine hydrogen atoms, optionally with the co-use of customary curing agents, solvents, additives and auxiliary agents, characterised in that reaction products of epichlorohydrin and cycloaliphatic diprimary diamines in a molar ratio of from 1 : >1 to 1 : 2 are used as component 2).

2. Process according to claim 1, characterised in that 1,2-diaminocyclohexane is used as cycloaliphatic diamine.

3. Process according to claims 1 and 2, characterised in that, as curing component 2), reaction products of epichlorohydrin and diamine component are reacted in a molar ratio of from 1 : 1,5 to 1 : 2.

4. Process according to claims 1 to 3, characterised in that condensation products of natural or synthetic monomeric fatty acids having from 12 to 22 carbon atoms with excess reaction product of epichlorohydrin with 1,2-diaminocyclohexane, which condensation products have amine numbers of from 300 to 500, are used as curing component 2).

5. Process according to claims 1 to 4, characterised in that liquid diglycidyl ethers based on bisphenol A and having an epoxy value of from 0.4 to 0.55 are used as epoxy resins.

6. Agents for the process according to claim 1, consisting of curable synthetic resin mixtures of

A. solid or liquid polyglycidyl compounds having epoxy values of from 0.1 to 0.6, optionally with the co-use of reactive low viscosity diluents, with

B. polyamines that have, on average, more than two reactive amine hydrogen atoms and are prepared by reacting

a) epichlorohydrin with

b) diprimary diamines

in a molar ratio of a) to b) of from 1 : >1 to 1 : 2, and optionally

C. customary curing agents, solvents, additives and auxiliary agents, characterised in that the diamines Bb) are cycloaliphatic diamines.

## Revendications

1. Procédé pour préparer des produits de revêtement à base de mélanges de résines synthétiques durcissables selon lequel on fait réagir:

1) des éthers polyglycidyliques, liquides ou solides, dont les indices d'époxy sont compris entre 0,1 et 0,6, éventuellement en utilisant des diluants réactifs peu visqueux, avec

2) des polyamines contenant en moyenne plus de deux atomes d'hydrogène aminés réactifs,

éventuellement en utilisant aussi des durcisseurs, solvants et additifs usuels,

et qui est caractérisé en ce qu'on utilise, comme composante 2), des produits résultant de la réaction de l'épichlorhydrine avec des diamines diprimaires cycloaliphatiques dans un rapport molaire supérieur ou égal à 1 : 2 et inférieur à 1.

2. Procédé selon la revendication 1 caractérisé en ce qu'on utilise le diamino-1,2 cyclohexane comme diamine cycloaliphatique.

0 131 802

3. Procédé selon l'une des revendications 1 et 2 caractérisé en ce qu'on utilise, comme composante durcisseur 2), des produits résultant de la réaction de l'épichlorhydrine avec la composante diamine dans un rapport molaire compris entre 1 : 2 et 1 : 1,5.

4. Procédé selon l'une quelconque des revendications 1 à 3, caractérisé en ce qu'on utilise, comme composante durcisseur 2), des produits de condensation d'indices d'amine compris entre 300 et 500 qui dérivent d'acides gras monomères, naturels ou synthétiques, contenant de 12 à 22 atomes de carbone et d'un excès d'un produit provenant de la réaction de l'épichlorhydrine avec le diamino-1,2 cyclohexane.

5. Procédé selon l'une quelconque des revendications 1 à 4, caractérisé en ce qu'on utilise, comme résines époxydiques, des éthers diglycidyliques liquides à base de bisphénol A qui ont un indice d'époxy de 0,4 à 0,55.

6. Produits pour le procédé selon la revendication 1, produit qui sont constitués:

A. de composés polyglycidyliques, liquides ou solides, qui ont des indices d'époxy compris entre 0,1 et 0,6, éventuellement avec des diluants réactifs peu visqueux, et

B. de polyamines contenant en moyenne plus de deux atomes d'hydrogène aminés réactifs, préparées par réaction :

a) de l'épichlorhydrine avec

b) des diamines diprimaires,

dans un rapport molaire de a) à b), supérieur ou égal à 1/2 et inférieur à 1, et éventuellement

C. de durcisseurs, solvants et additifs usuels,

et qui sont caractérisés en ce que les diamines B.b) sont des diamines cycloaliphatiques.

6